(19) Europäisches Patentamt
European Patent Office
Office européen des brevets

(11) EP 4 615 069 A1

(12) EUROPEAN PATENT APPLICATION
published in accordance with Art. 153(4) EPC

(43) Date of publication:
10.09.2025 Bulletin 2025/37

(51) International Patent Classification (IPC):
H04W 52/14 (2009.01)     H04W 52/36 (2009.01)
H04W 8/24 (2009.01)      H04B 7/0426 (2017.01)
H04B 7/0456 (2017.01)    H04B 7/06 (2006.01)
H04W 72/12 (2023.01)     H04W 52/32 (2009.01)
H04W 52/42 (2009.01)

(21) Application number: 23886245.2

(22) Date of filing: 01.11.2023

(52) Cooperative Patent Classification (CPC):
H04B 7/0426; H04B 7/0456; H04B 7/06;
H04W 8/24; H04W 52/14; H04W 52/32;
H04W 52/36; H04W 52/42; H04W 72/12

(86) International application number:
PCT/KR2023/017199

(87) International publication number:
WO 2024/096549 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.11.2022 KR 20220145978
10.08.2023 KR 20230105126

(71) Applicant: LG Electronics Inc.
Yeongdeungpo-gu
Seoul 07336 (KR)

(72) Inventors:
• PARK, Haewook
  Seoul 06772 (KR)
• KANG, Jiwon
  Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **METHOD AND DEVICE FOR TRANSMITTING AND RECEIVING SIGNALS IN WIRELESS COMMUNICATION SYSTEM**

(57) A method for a terminal to transmit signals in a wireless communication system according to at least one of the embodiments disclosed herein comprises: transmitting terminal capability information related to 8 transmission antenna ports of the terminal; receiving downlink control information (DCI) for uplink scheduling including information about a transmission precoding index (TPMI); and transmitting an uplink signal on the basis of the DCI. The terminal capability information may include information for reporting an antenna port group supporting full power transmission among a plurality of antenna port groups composed on the basis of the 8 transmission antenna ports, and the transmission power of the uplink signal may be determined on the basis of whether the TPMI acquired through the DCI is related to the reported antenna port group.

**FIG. 15**

EP 4 615 069 A1

**Description**

**TECHNICAL FIELD**

The present disclosure relates to a wireless communication system, and more particularly, to a method and apparatus for transmitting or receiving a downlink/uplink radio signal in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

According to an aspect, a method of transmitting a signal by a user equipment (UE) in a wireless communication system may include transmitting UE capability information related to eight transmission antenna ports of the UE, receiving downlink control information (DCI) for uplink scheduling including information about a transmission precoding index (TPMI), and transmitting an uplink signal based on the DCI. The UE capability information may include information for reporting an antenna port group supporting full power transmission among a plurality of antenna port groups configured based on the eight transmission antenna ports, and transmission power of the uplink signal may be determined based on whether the TPMI obtained through the DCI is related to the reported antenna port group.

The information for reporting the antenna port group may be bit information, and the bit information may be set to a first value to report that a first antenna port group supports the full power transmission or to a second value to report that a second antenna port group supports the full power transmission.

Based on the TPMI obtained through the DCI being one of TPMIs related to the reported antenna port group, a power scaling value of the uplink signal may be set to 1.

Based on the TPMI obtained through the DCI belonging to TPMIs related only to an antenna port group other than the reported antenna port group, a power scaling value of the uplink signal may be set to less than 1.

The number of the plurality of antenna port groups may be 2.

TPMIs related to the reported antenna port group may include (i) 16 TPMIs among TPMIs of a codebook for 1-layer transmission, (ii) 8 TPMIs among TPMIs of a codebook for 2-layer transmission, (iii) 4 TPMIs among TPMIs of a codebook for 3-layer transmission, and (iv) 2 TPMIs among TPMIs of a codebook for 4-layer transmission.

The information for reporting the antenna port group supporting the full power transmission may be bit information for reporting a group of TPMIs including the antenna port group.

The transmission power of the uplink signal may be determined based on a larger value of 'X' and 'Y', 'X' may be a parameter reported to a network by the UE, and 'Y' may be a ratio between the number of sounding reference signal (SRS) antenna ports and the number of non-zero physical uplink shared channel (PUSCH) antenna ports.

'X' may be any one of 1, 1/2, 1/4, 3/4, and 1/8.

According to another aspect, a computer-readable recording medium storing a program for performing the method of transmitting a signal may be provided.

According to another aspect, a UE for performing the method of transmitting a signal may be provided.

According to another aspect, a processing device for controlling a UE performing the method of transmitting a signal may be provided.

According to another aspect, a method for receiving a signal by a base station (BS) in a wireless communication system may include receiving UE capability information related to eight transmission antenna ports from a UE, transmitting DCI for uplink scheduling including information about a TPMI, and receiving an uplink signal based on the DCI. The UE capability information may include information for reporting an antenna port group supporting full power transmission among a plurality of antenna port groups configured based on the eight transmission antenna ports, and transmission power of the uplink signal may be determined based on whether the TPMI obtained through the DCI is related to the reported antenna port group.

According to another aspect, a BS for performing the method of receiving a signal may be provided.

## ADVANTAGEOUS EFFECTS

According to the present disclosure, wireless signal transmission and reception may be efficiently performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 illustrates multi-TRP transmissions.

FIG. 9 illustrates a partial coherent 8Tx panel structure.

FIG. 10 illustrates an intermediate precoding matrix for an 8Tx TPMI.

FIG. 11 illustrates sub-matrices for an 8Tx TPMI.

FIG. 12 illustrates an implementation example of a method of operating a user equipment (UE) in a wireless communication system according to an embodiment of the present disclosure.

FIG. 13 illustrates an implementation example of a method of operating a base station (BS) in a wireless communication system according to an embodiment of the present disclosure.

FIGS. 14 to 17 illustrate a communication system 1 and wireless devices applicable to the present disclosure.

FIG. 18 illustrates a discontinuous reception (DRX) operation applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

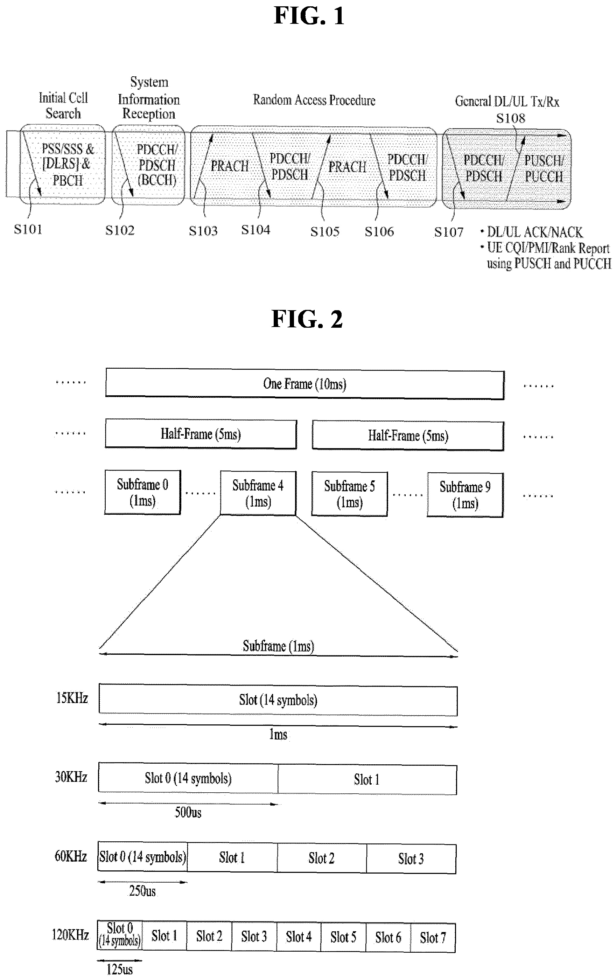

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

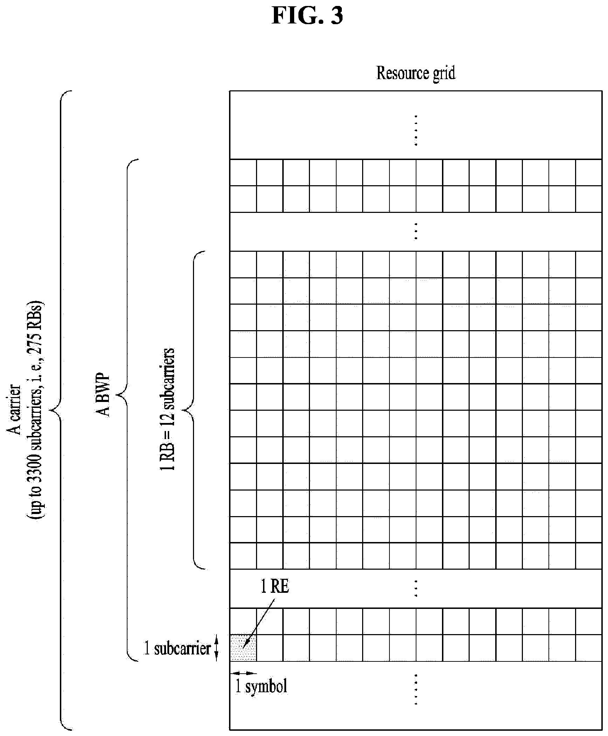

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

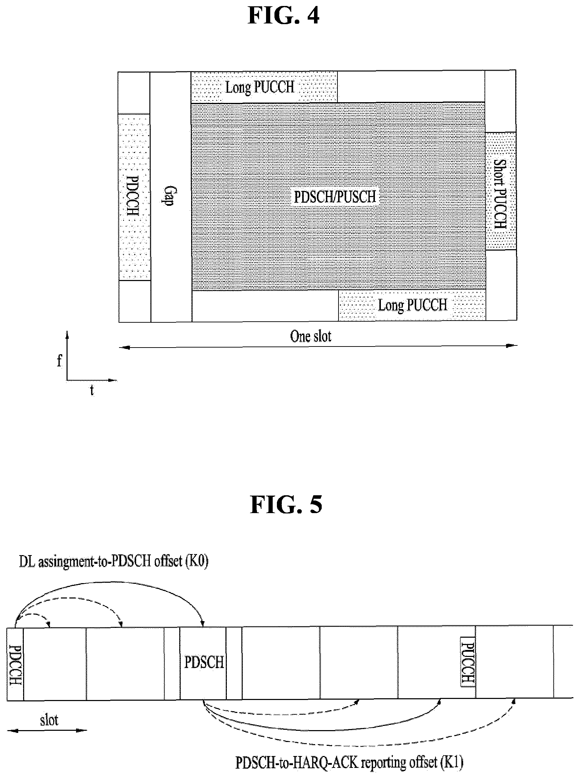

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.
monitoringSlotPeriodicityAndOffset: A PDCCH monitoring periodicity (in slots) and a PDCCH monitoring offset (in slots).
monitoringSymbolsWithinSlot: PDCCH monitoring symbols in a slot (e.g., the first symbol(s) of a CORESET).
nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{\text{symb}}^{\text{PUCCH}}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |

(continued)

| PUCCH format | Length in OFDM symbols $N_{symb}^{PUCCH}$ | Number of bits | Usage | Etc |
|---|---|---|---|---|
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner. Table 6 is an excerpt of UL precoding and its codebook defined in the NR standard document TS38.211.

【Table 6】

The block of vectors $\left[ y^{(0)}(i) \ \ldots \ y^{(v-1)}(i) \right]^T$, $i = 0,1,\ldots, M_{symb}^{layer} - 1$ shall be precoded according to

$$\begin{bmatrix} z^{(p_0)}(i) \\ \vdots \\ z^{(p_{P-1})}(i) \end{bmatrix} = W \begin{bmatrix} y^{(0)}(i) \\ \vdots \\ y^{(v-1)}(i) \end{bmatrix}$$

where $i = 0,1,\ldots, M_{symb}^{ap} - 1$, $M_{symb}^{ap} = M_{symb}^{layer}$. The set of antenna ports $\{p_0,\ldots,p_{P-1}\}$ shall be determined according to the procedure in [6, TS 38.214].

For non-codebook-based transmission, the precoding matrix $W$ equals the identity matrix.

For codebook-based transmission, the precoding matrix $W$ is given by $W = 1$ for single-layer transmission on a single antenna port, otherwise by Tables 6.3.1.5-1 to 6.3.1.5-7 with the TPMI index obtained from the DCI scheduling the uplink transmission or the higher layer parameters according to the procedure in [6, TS 38.214].

When the higher-layer parameter *txConfig* is not configured, the precoding matrix $W = 1$.

**Table 6.3.1.5-1: Precoding matrix $W$ for single-layer transmission using two antenna ports.**

| TPMI index | $W$ (ordered from left to right in increasing order of TPMI index) | | | | | | | |
|---|---|---|---|---|---|---|---|---|
| $0-5$ | $\frac{1}{\sqrt{2}}\begin{bmatrix} 1 \\ 0 \end{bmatrix}$ | $\frac{1}{\sqrt{2}}\begin{bmatrix} 0 \\ 1 \end{bmatrix}$ | $\frac{1}{\sqrt{2}}\begin{bmatrix} 1 \\ 1 \end{bmatrix}$ | $\frac{1}{\sqrt{2}}\begin{bmatrix} 1 \\ -1 \end{bmatrix}$ | $\frac{1}{\sqrt{2}}\begin{bmatrix} 1 \\ j \end{bmatrix}$ | $\frac{1}{\sqrt{2}}\begin{bmatrix} 1 \\ -j \end{bmatrix}$ | - | - |

**Table 6.3.1.5-2: Precoding matrix $W$ for single-layer transmission using four antenna ports with transform precoding enabled.**

| TPMI index | $W$ (ordered from left to right in increasing order of TPMI index) | | | | | | | |
|---|---|---|---|---|---|---|---|---|
| $0-7$ | $\frac{1}{2}\begin{bmatrix} 1 \\ 0 \\ 0 \\ 0 \end{bmatrix}$ | $\frac{1}{2}\begin{bmatrix} 0 \\ 1 \\ 0 \\ 0 \end{bmatrix}$ | $\frac{1}{2}\begin{bmatrix} 0 \\ 0 \\ 1 \\ 0 \end{bmatrix}$ | $\frac{1}{2}\begin{bmatrix} 0 \\ 0 \\ 0 \\ 1 \end{bmatrix}$ | $\frac{1}{2}\begin{bmatrix} 1 \\ 0 \\ 1 \\ 0 \end{bmatrix}$ | $\frac{1}{2}\begin{bmatrix} 1 \\ 0 \\ -1 \\ 0 \end{bmatrix}$ | $\frac{1}{2}\begin{bmatrix} 1 \\ 0 \\ j \\ 0 \end{bmatrix}$ | $\frac{1}{2}\begin{bmatrix} 1 \\ 0 \\ -j \\ 0 \end{bmatrix}$ |
| $8-15$ | $\frac{1}{2}\begin{bmatrix} 0 \\ 1 \\ 0 \\ 1 \end{bmatrix}$ | $\frac{1}{2}\begin{bmatrix} 0 \\ 1 \\ 0 \\ -1 \end{bmatrix}$ | $\frac{1}{2}\begin{bmatrix} 0 \\ 1 \\ 0 \\ j \end{bmatrix}$ | $\frac{1}{2}\begin{bmatrix} 0 \\ 1 \\ 0 \\ -j \end{bmatrix}$ | $\frac{1}{2}\begin{bmatrix} 1 \\ 1 \\ 1 \\ -1 \end{bmatrix}$ | $\frac{1}{2}\begin{bmatrix} 1 \\ 1 \\ j \\ j \end{bmatrix}$ | $\frac{1}{2}\begin{bmatrix} 1 \\ 1 \\ -1 \\ 1 \end{bmatrix}$ | $\frac{1}{2}\begin{bmatrix} 1 \\ 1 \\ -j \\ -j \end{bmatrix}$ |
| $16-23$ | $\frac{1}{2}\begin{bmatrix} 1 \\ j \\ 1 \\ j \end{bmatrix}$ | $\frac{1}{2}\begin{bmatrix} 1 \\ j \\ j \\ 1 \end{bmatrix}$ | $\frac{1}{2}\begin{bmatrix} 1 \\ j \\ -1 \\ -j \end{bmatrix}$ | $\frac{1}{2}\begin{bmatrix} 1 \\ j \\ -j \\ -1 \end{bmatrix}$ | $\frac{1}{2}\begin{bmatrix} 1 \\ -1 \\ 1 \\ 1 \end{bmatrix}$ | $\frac{1}{2}\begin{bmatrix} 1 \\ -1 \\ j \\ -j \end{bmatrix}$ | $\frac{1}{2}\begin{bmatrix} 1 \\ -1 \\ -1 \\ -1 \end{bmatrix}$ | $\frac{1}{2}\begin{bmatrix} 1 \\ -1 \\ -j \\ j \end{bmatrix}$ |
| $24-27$ | $\frac{1}{2}\begin{bmatrix} 1 \\ -j \\ 1 \\ -j \end{bmatrix}$ | $\frac{1}{2}\begin{bmatrix} 1 \\ -j \\ j \\ -1 \end{bmatrix}$ | $\frac{1}{2}\begin{bmatrix} 1 \\ -j \\ -1 \\ j \end{bmatrix}$ | $\frac{1}{2}\begin{bmatrix} 1 \\ -j \\ -j \\ 1 \end{bmatrix}$ | - | - | - | - |

**Table 6.3.1.5-3: Precoding matrix $W$ for single-layer transmission using four antenna ports with transform precoding disabled.**

| TPMI index | $W$ (ordered from left to right in increasing order of TPMI index) | | | | | | | |
|---|---|---|---|---|---|---|---|---|
| $0-7$ | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| $8-15$ | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| $16-23$ | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| $24-27$ | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

**Table 6.3.1.5-4: Precoding matrix $W$ for two-layer transmission using two antenna ports with transform precoding disabled.**

| TPMI index | $W$ (ordered from left to right in increasing order of TPMI index) | | |
|---|---|---|---|
| $0-2$ | $\frac{1}{\sqrt{2}}\begin{bmatrix}1 & 0\\0 & 1\end{bmatrix}$ | $\frac{1}{2}\begin{bmatrix}1 & 1\\1 & -1\end{bmatrix}$ | $\frac{1}{2}\begin{bmatrix}1 & 1\\j & -j\end{bmatrix}$ |

**Table 6.3.1.5-5: Precoding matrix $W$ for two-layer transmission using four antenna ports with transform precoding disabled.**

| TPMI index | $W$ (ordered from left to right in increasing order of TPMI index) | | | |
|---|---|---|---|---|
| 0 – 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 – 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 – 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12 – 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 – 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20 – 21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

**Table 6.3.1.5-6: Precoding matrix $W$ for three-layer transmission using four antenna ports with transform precoding disabled.**

| TPMI index | $W$ (ordered from left to right in increasing order of TPMI index) | | | |
|---|---|---|---|---|
| 0 – 3 | $\frac{1}{2}\begin{bmatrix}1&0&0\\0&1&0\\0&0&1\\0&0&0\end{bmatrix}$ | $\frac{1}{2}\begin{bmatrix}1&0&0\\0&1&0\\1&0&0\\0&0&1\end{bmatrix}$ | $\frac{1}{2}\begin{bmatrix}1&0&0\\0&1&0\\-1&0&0\\0&0&1\end{bmatrix}$ | $\frac{1}{2\sqrt{3}}\begin{bmatrix}1&1&1\\1&-1&1\\1&1&-1\\1&-1&-1\end{bmatrix}$ |
| 4 – 6 | $\frac{1}{2\sqrt{3}}\begin{bmatrix}1&1&1\\1&-1&1\\j&j&-j\\j&-j&-j\end{bmatrix}$ | $\frac{1}{2\sqrt{3}}\begin{bmatrix}1&1&1\\-1&1&-1\\1&1&-1\\-1&1&1\end{bmatrix}$ | $\frac{1}{2\sqrt{3}}\begin{bmatrix}1&1&1\\-1&1&-1\\j&j&-j\\-j&j&j\end{bmatrix}$ | - |

**Table 6.3.1.5-7: Precoding matrix $W$ for four-layer transmission using four antenna ports with transform precoding disabled.**

| TPMI index | $W$ (ordered from left to right in increasing order of TPMI index) | | | |
|---|---|---|---|---|
| 0 – 3 | $\dfrac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\dfrac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\dfrac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\dfrac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\dfrac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

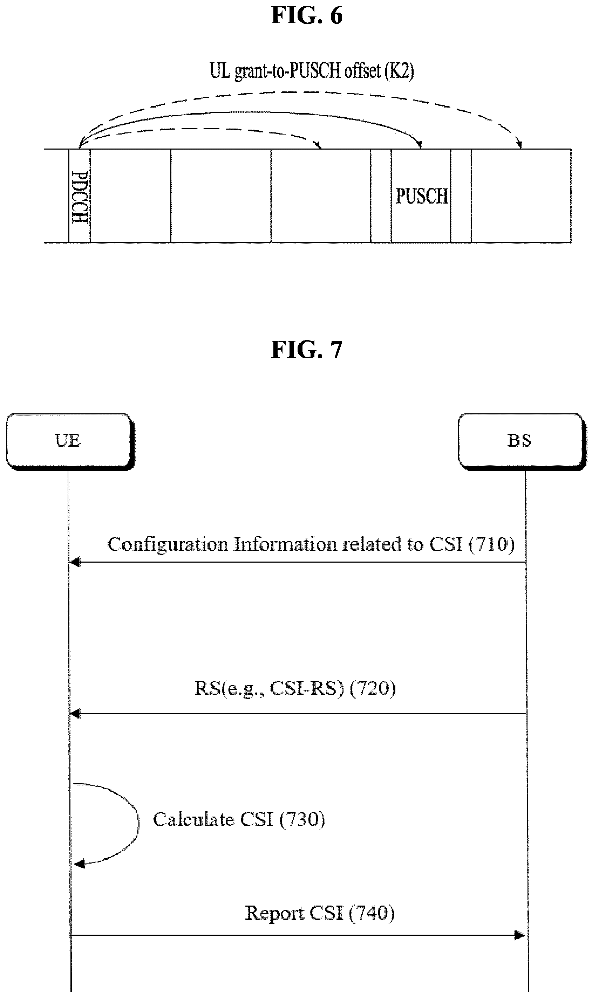

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A UE may be configured with a list of a plurality of TCI-State configurations through a higher layer parameter PDSCH-Config. Each TCI-State is associated with a QCL configuration parameter between one or two DL RSs and a DM-RS port of a PDSCH. QCL may include qcl-Type1 for a first DL RS and qcl-Type2 for a second DL RS. A QCL type may correspond to one of the following types.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

M-TRP(multiple-transmission/reception point)-related operation

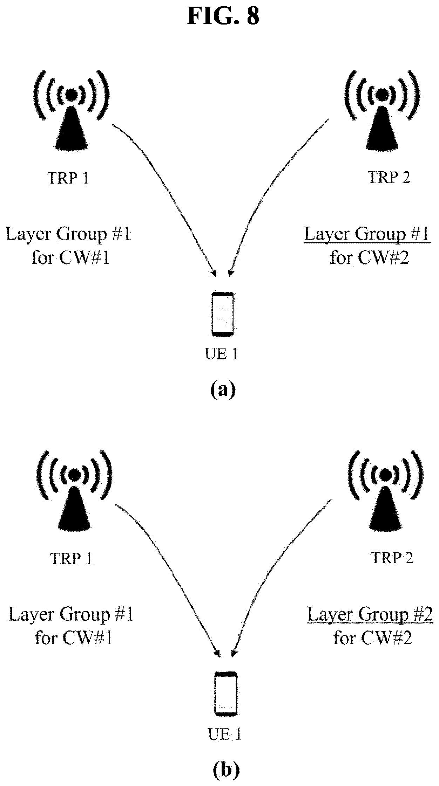

FIG. 8 illustrates M-TRP transmissions. Referring to FIG. 8(a), a group of layers carrying the same codeword (CW) (or TB) correspond to different TRPs. Referring to FIG. 8(b), different CWs are transmitted through layer groups of different TRPs. In FIG. 8, it may be assumed that TBs corresponding to CW #1 and CW #2 are identical. That is, this implies that CW #1 and CW #2 are different CWs into which the same TB is converted through channel coding by different TRPs, respectively. Therefore, it may be seen as an example of repeated transmissions of the same TB. Compared to the case of FIG. 8(a), the case of FIG. 8(b) may have a disadvantage that a code rate corresponding to a TB is high. However, it has an advantage that the code rate or modulation order of each CW may be adjusted by indicating different redundancy version (RV) values for encoded bits generated from the same TB according to a channel environment.

According to the exemplary method of FIG. 8(a) and FIG. 8(b), the data reception probability of a UE may be increased because the same TB is repeatedly transmitted through different layer groups, and each layer group is transmitted by different TRPs/panels. This is referred to as a spatial division multiplexing (SDM)-based M-TRP URLLC transmission method. Layers belonging to different layer groups are transmitted through DMRS ports belonging to different DMRS CDM groups, respectively.

Further, although the above description related to multiple TRPs has been given in the context of spatial division multiplexing (SDM) using different layers, it may be extended and applied to frequency division multiplexing (FDM) based on different frequency domain resources (e.g., RBs/PRBs (sets)) and/or time division multiplexing (TDM) based on different time domain resources (e.g., slots, symbols, and sub-symbols).

## Full power operation for 8-Tx UL Transmission

A method of supporting an effective full power operation in an 8Tx UL codebook-based transmission of a UE with multiple antennas and/or multiple panels is disclosed below.

Table 7 is an excerpt from a section related to the full power operation in TS 38.213.

[Table 7]

---

**7.1 Physical uplink shared channel**

For a PUSCH transmission on active UL BWP *b*, as described in clause 12, of carrier *f* of serving cell *c,* a UE first calculates a linear value $\hat{P}_{\text{PUSCH},b,f,c}(i, j, q_d, l)$ of the transmit power $\hat{P}_{\text{PUSCH},b,f,c}(i, j, q_d, l)$, with parameters as defined in clause

7.1.1. For a PUSCH transmission scheduled by a DCI format other than DCI format 0_0, or configured by *ConfiguredGrantConfig* or *semiPersistentOnPUSCH,* if *txConfig* in *PUSCH-Config* is set to 'codebook',

- if *ul-FullPowerTransmission* in *PUSCH-Config* is provided, the UE scales $\hat{P}_{\text{PUSCH},b,f,c}(i, j, q_d, l)$ by s where:

- if *ul-FullPowerTransmission* in *PUSCH-Config* is set to *fullpowerMode1,* and each SRS resource in the *SRS-ResourceSet* with *usage* set to 'codebook' has more than one SRS port, s is the ratio of a number of antenna ports with non-zero PUSCH transmission power over the maximum number of SRS ports supported by the UE in one SRS resource

- if *ul-FullPowerTransmission* in *PUSCH-Config* is set to *fullpowerMode2,*

- *s* = 1 for full power TPMIs reported by the UE [18, TS 38.306], and s is the ratio of a number of antenna ports with non-zero PUSCH transmission power over a number of SRS ports for remaining TPMIs, where the number of SRS ports is associated with an SRS resource indicated by an SRI field in a DCI format scheduling the PUSCH transmission if more than one SRS resource is configured in the *SRS-ResourceSet* with *usage* set to 'codebook', or indicated by Type 1 configured grant, or the number of SRS ports is associated with the SRS resource if only one SRS resource is configured in the *SRS-ResourceSet* with *usage* set to 'codebook',

- *s* = 1, if an SRS resource with a single port is indicated by an SRI field in a DCI format scheduling the PUSCH transmission when more than one SRS resource is provided in the *SRS-ResourceSet* with *usage* set to 'codebook', or indicated by Type 1 configured grant, or if only one SRS resource with a single port is provided in the *SRS-ResourceSet* with *usage* set to 'codebook', and

- if *ul-FullPowerTransmission* in *PUSCH-Config* is set to *fullpower, s* = 1

- else, if each SRS resource in the *SRS-ResourceSet* with *usage* set to 'codebook' has more than one SRS port, the UE scales the linear value by the ratio of the number of antenna ports with a non-zero PUSCH transmission power to the maximum number of SRS ports supported by the UE in one SRS resource.

The UE splits the power equally across the antenna ports on which the UE transmits the PUSCH with non-zero power.

---

Referring to Table 7, the Rel-16 full power modes are divided into three modes, Fullpower Mode 0, 1, and 2, which are based on the antenna capability of the UE.

    (i) In Mode 0, all power amplifiers (PAs) connected to antennas of the UE are full rated PAs. Full rated means that each PA supports maximum transmission power according to the power class (PC) of the UE. For example, when the power class is PC3, the UE should be able to transmit up to 23dBm, and 23dBm may be achieved using a single PA.
    (ii) In Mode 1, a new codebook subset obtained by adding (b) a full coherent TPMI to (a) a Rel-15 partial/non-coherent codebook subset in the existing codebook subsets is used.

For the convenience of description, (a) the Rel-15 partial/non-coherent codebook subset will first be described based on the standard Table 6.3.1.5-3 with transform precoding disabled. Only TMPI indexes 0 to 3, which are codebook subsets, are available for a UE with non-coherent antennas, and only TMPI indexes 0 to 11, which are codebook subsets, are available for a UE with partial-coherent antennas. All TMPIs 0 to 27 are available for a UE with full-coherent antennas.

In Mode 1, power control of the UE is based on an operation of legacy Rel-15.

In the power control operation based on legacy Rel-15, total power is divided equally for ports used for a PUSCH transmission, and the number of non-zero TPMI values corresponding to each antenna port is divided by a maximum number of SRS ports that the UE may transmit, for scaling. For example, TPMIs for a 1-layer transmission in 4 Tx (e.g., the maximum number of SRS ports is 4) are defined in Table 6.3.1.5-2 and Table 6.3.1.5-3 which are excerpts from the standard, shown in Table 6.

When 1/2*[1 0 1 0] corresponding to TPMI index 4 for a partial/full-coherent UE is used, the number of non-zero ports is 2, and thus power is scaled down to β=2/4=1/2 by Equation 1 described below. In the case of 1/2* [1 1 1 1] corresponding to TPMI index 12 for a full-coherent UE, the number of non-zero ports is 4, and thus power is scaled to 1 according to β=4/4. That is, when 1/2*[1 0 1 0] corresponding to TPMI index 4 is used, the power is scaled down to β=1/2 and thus transmission power available for the UE is reduced to a half. For example, in the case of a UE with PAs having lower performance than a full rated PA, performance and coverage may be decreased due to power scaling down such as β=1/2.

Since the problem caused by power scaling down occurs in TPMIs for the partial/non-coherent UE, Mode 1 additionally uses (b) the full coherent TPMI, which is a TPMI including non-zero elements, to solve this problem. That is, a scaling value of β=1 becomes available in Mode 1 by allocating (b) the full coherent TPMI (e.g., [1 1 1 1] for 4 Tx) in addition to (a) the Rel-15 partial/non-coherent codebook subset.

(iii) In Mode 2, the UE may report the index of a TPMI group that it may transmit at full power as a capability. For example, when some of the PAs of the UE are full rated PAs and the others are full-rated PAs, the UE may transmit at full power through antenna ports connected to the full rated PAs. The UE may report the index of a TPMI group including the antennas capable of transmitting at full power as a capability. As a more specific example of capability signaling of the index of the TPMI group of the UE for Mode 2, 4 Tx will be described with reference to Table 9. In Table 9, TPMI groups G0 to G3 are related to non-coherent, and G0 to G6 are related to partial coherent. When a BS indicates a TPMI group transmittable at full power by UL scheduling DCI, the UE does not perform power scaling down by fixing the scaling to 1 for the UL scheduling. On the contrary, when the UE scales a TPMI that is not included in the TPMI group transmittable at full power, the UE scales it to the number of non-zero elements of a scheduled TPMI/the number of configured SRS ports.

The power scaling law of Full Power (ii) Mode 1 and (iii) Mode 2 described above is summarized as Equation 1.

[Equation 1]

(Rel-15, Rel-16) Full Power Mode 1

$$\beta = \frac{\#\ of\ non-zero\ PUSCH\ ports}{Max\ \#\ of\ SRS\ port\ supported\ by\ UE}$$

(Rel-16) Full Power Mode 2

For full power TPMIs (reported through UE capability signaling), $\beta = 1$

Otherwise, $\beta = \dfrac{\#\ of\ non-zero\ PUSCH\ ports}{\#\ of\ SRS\ ports\ in\ indicated\ SRS\ resource}$

In addition, since FWA, CPE, vehicles, industrial devices, and so on are considered for 8Tx UEs, their capabilities are likely to be higher than those of handheld devices. Although a basic operation for 8Tx may be to follow the principle of the existing full power operation described above, the number of ports increases and thus it may be inefficient to reflect the increased number of ports as it is in terms of signaling overhead. Accordingly, an enhanced operation for 8Tx is proposed as follows.

**Proposal 1**

For a more effective full power operation, the UE reports the capability (e.g. full power/half power/quarter power) of UL power (e.g., PUSCH/SRS power) that it may transmit to the BS, and the power scaling law may be applied based on the reported power. An example of applying the power scaling law is given as Equation 2.

[Equation 2]

$$\max \left(X, \frac{\#\ of\ non-zero\ PUSCH\ ports}{\#\ of\ SRS\ ports\ in\ indicated\ SRS\ resource}\right)$$

In Equation 2, X is information about the UL power that the UE reports to the BS, and may have a power ratio value such as X = 1, 1/2, 1/4, 3/4, or 1/8. In addition, a TPMI set to which the power scaling law is applied may be separately defined, so that the power scaling law is applied only to the TPMI set. The set may include all UL codebook sets configurable for the UE.

Table 8 illustrates an exemplary PA structure/type for an 8Tx UE. Herein, X means a full rated PA, and $Y_i < X$. That is, in the case of PC3, X=23dBm, and $Y_i$ may have a value less than 23dBm, for example, 14, 17, or 20dBm. Depending on the value of $Y_i$, the number of possible combinations may be very large, and it is not preferable to greatly limit the value in terms of the freedom of implementation of the UE. Therefore, the introduction of soft full power transmission, such as Proposal 1, may be more effective.

[Table 8]

|  | Port 1 | Port 2 | Port 3 | Port 4 | Port 5 | Port 6 | Port 7 | Port 8 |
|---|---|---|---|---|---|---|---|---|
| Type 1 | X | X | X | X | X | X | X | X |
| Type 2 | $Y_1$ | $Y_2$ | $Y_3$ | $Y_4$ | $Y_5$ | $Y_6$ | $Y_7$ | $Y_8$ |
| Type 3 | X | $Y_1$ | $Y_2$ | $Y_3$ | $Y_4$ | $Y_5$ | $Y_6$ | $Y_7$ |
| Type 4 | X | X | $Y_1$ | $Y_2$ | $Y_3$ | $Y_4$ | $Y_5$ | $Y_6$ |
| Type 5 | X | X | X | $Y_1$ | $Y_2$ | $Y_3$ | $Y_4$ | $Y_5$ |
| Type 6 | X | X | X | X | $Y_1$ | $Y_2$ | $Y_3$ | $Y_4$ |
| Type 7 | X | X | X | X | X | $Y_1$ | $Y_2$ | $Y_3$ |
| Type 8 | X | X | X | X | X | X | $Y_1$ | $Y_2$ |
| Type 9 | X | X | X | X | X | X | X | $Y_1$ |

While when a UE that does not have the full power capability transmits a specific TPMI, power is excessively scaled down, the proposed scaling law ensures power scaling to at least an X value or more, which is advantageous in terms of coverage enhancement. That is, the existing Mode 2 has the problem of excessive scaling to 1 or the 'number of non-zero PUSCH ports/number of SRS ports in indicated SRS resource', as illustrated in Equation 1, whereas the proposed method may solve this problem and improve flexibility through soft scaling.

**Proposal 1-1**

As an example related to Proposal 1, the UE may report information about power it may transmit as a capability without using Equation 2, and use the power scaling value as it is when transmitting a PUSCH/SRS. For example, it may be agreed/configured that the UE applies the afore-described X value to all TPMI sets or only to a specific TPMI set. Alternatively, it may be agreed or configured/reported that a plurality of X values are set and each of the X values is applied to a specific TPMI set.

Table 9 is an exemplary TPMI set applied to Rel-16 4Tx.

[Table 9]

| TPMI groups | 1 Layer | 2 Layer | 3 Layer |
|---|---|---|---|
| G0 | $\frac{1}{2}\begin{bmatrix} 1 \\ 0 \\ 0 \\ 0 \end{bmatrix}$ |  |  |

(continued)

| TPMI groups | 1 Layer | 2 Layer | 3 Layer |
|---|---|---|---|
| G1 | $\left\{\dfrac{1}{2}\begin{bmatrix}1\\0\\0\\0\end{bmatrix}, \dfrac{1}{2}\begin{bmatrix}0\\0\\1\\0\end{bmatrix}\right\}$ | $\dfrac{1}{2}\begin{bmatrix}10\\00\\01\\00\end{bmatrix}$ | |
| G2 | $\left\{\dfrac{1}{2}\begin{bmatrix}1\\0\\0\\0\end{bmatrix}, \dfrac{1}{2}\begin{bmatrix}0\\1\\0\\0\end{bmatrix}, \dfrac{1}{2}\begin{bmatrix}0\\0\\1\\0\end{bmatrix}\right\}$ | $\left\{\dfrac{1}{2}\begin{bmatrix}10\\00\\01\\00\end{bmatrix}, \dfrac{1}{2}\begin{bmatrix}10\\01\\00\\00\end{bmatrix}, \dfrac{1}{2}\begin{bmatrix}00\\10\\01\\00\end{bmatrix}\right\}$ | $\left\{\dfrac{1}{2}\begin{bmatrix}100\\010\\001\\000\end{bmatrix}\right\}$ |
| G3 | | $\left\{\dfrac{1}{2}\begin{bmatrix}10\\00\\01\\00\end{bmatrix}, \dfrac{1}{2}\begin{bmatrix}10\\01\\00\\00\end{bmatrix}, \dfrac{1}{2}\begin{bmatrix}00\\10\\01\\00\end{bmatrix}\right\}$ | $\left\{\dfrac{1}{2}\begin{bmatrix}100\\010\\001\\000\end{bmatrix}\right\}$ |
| G4 | $\left\{\dfrac{1}{2}\begin{bmatrix}1\\0\\1\\0\end{bmatrix}, \dfrac{1}{2}\begin{bmatrix}1\\0\\-1\\0\end{bmatrix}, \dfrac{1}{2}\begin{bmatrix}1\\0\\j\\0\end{bmatrix}, \dfrac{1}{2}\begin{bmatrix}1\\0\\-j\\0\end{bmatrix}\right\}$ | $\dfrac{1}{2}\begin{bmatrix}10\\00\\01\\00\end{bmatrix}$ | |
| G5 | $\left\{\dfrac{1}{2}\begin{bmatrix}1\\0\\1\\0\end{bmatrix}, \dfrac{1}{2}\begin{bmatrix}1\\0\\-1\\0\end{bmatrix}, \dfrac{1}{2}\begin{bmatrix}1\\0\\j\\0\end{bmatrix}, \dfrac{1}{2}\begin{bmatrix}1\\0\\-j\\0\end{bmatrix}\right\}$ | $\left\{\dfrac{1}{2}\begin{bmatrix}10\\00\\01\\00\end{bmatrix}, \dfrac{1}{2}\begin{bmatrix}10\\01\\00\\00\end{bmatrix}, \dfrac{1}{2}\begin{bmatrix}00\\10\\01\\00\end{bmatrix}\right\}$ | $\left\{\dfrac{1}{2}\begin{bmatrix}100\\010\\001\\000\end{bmatrix}\right\}$ |
| G6 | $\left\{\dfrac{1}{2}\begin{bmatrix}1\\0\\1\\0\end{bmatrix}, \dfrac{1}{2}\begin{bmatrix}1\\0\\-1\\0\end{bmatrix}, \dfrac{1}{2}\begin{bmatrix}1\\0\\j\\0\end{bmatrix}, \dfrac{1}{2}\begin{bmatrix}1\\0\\-j\\0\end{bmatrix}\right\};$ $\left\{\dfrac{1}{2}\begin{bmatrix}0\\1\\0\\1\end{bmatrix}, \dfrac{1}{2}\begin{bmatrix}0\\1\\0\\-1\end{bmatrix}, \dfrac{1}{2}\begin{bmatrix}0\\1\\0\\j\end{bmatrix}, \dfrac{1}{2}\begin{bmatrix}0\\1\\0\\-j\end{bmatrix}\right\}$ | $\left\{\dfrac{1}{2}\begin{bmatrix}10\\00\\01\\00\end{bmatrix}, \dfrac{1}{2}\begin{bmatrix}00\\10\\00\\01\end{bmatrix}, \dfrac{1}{2}\begin{bmatrix}10\\01\\00\\00\end{bmatrix}, \dfrac{1}{2}\begin{bmatrix}10\\00\\00\\01\end{bmatrix}, \dfrac{1}{2}\begin{bmatrix}00\\10\\01\\00\end{bmatrix}, \dfrac{1}{2}\begin{bmatrix}00\\00\\10\\01\end{bmatrix}\right\}$ | $\left\{\dfrac{1}{2}\begin{bmatrix}100\\010\\001\\000\end{bmatrix}\right\}$ |

In Table 9, the UE may report to the network that full power transmission is possible for at least one TPMI in each of TPMI groups G0 to G6. As described through Equation 1, when performing a UL transmission based on a TPMI belonging to a reported TPMI set, the UE sets the scaling value as $\beta=1$, and when performing a UL transmission based on a TPMI which does not belong to the reported TPMI set, the UE uses the value '$\beta=$number of non-zero PUSCH ports/number of SRS ports in indicated SRS resource'.

In the proposal, a method of setting a plurality of scaling values for a plurality of TPMI groups is proposed.

For example, $\beta=1$ may be set for G3, $\beta=3/4$ may be set for G4, and for the remaining TPMI values, '$\beta=$number of non-zero PUSCH ports/number of SRS ports in indicated SRS resource' may be used. In this case, when the TPMIs of two groups overlap, it may be pre-agreed/pre-indicated/pre-configured that the UE uses a large $\beta$ value or a small $\beta$ value.

Although the TPMI set is for 4Tx in the above example, this proposal may be applied/extended to an 8Tx codebook.

Further, in full power mode 2, antenna virtualization is considered, and thus 1 or 2 or 4 or 8 port SRS resources may be configured for or indicated to even an 8Tx UE. Therefore, the UE may report a maximum transmittable power ratio for each resource to the BS, and the BS may configure an SRS resource for the UE based on the report. For example, in the legacy operation, the UE reports a capability for full power mode 2 and/or a configurable SRS resource combination. Then, the BS considers that a full power operation is possible for the resources, and for a soft full power operation, the UE may also report information about a transmittable power ratio for the transmittable SRS resources. For example, the UE may report $\beta=1$ for 1- or 2-port transmission and $\beta=3/4$ for 4- or 8-port transmission. Then, the UE may be configured with an SRS transmission suitable for the soft full power operation in consideration of location information and so on.

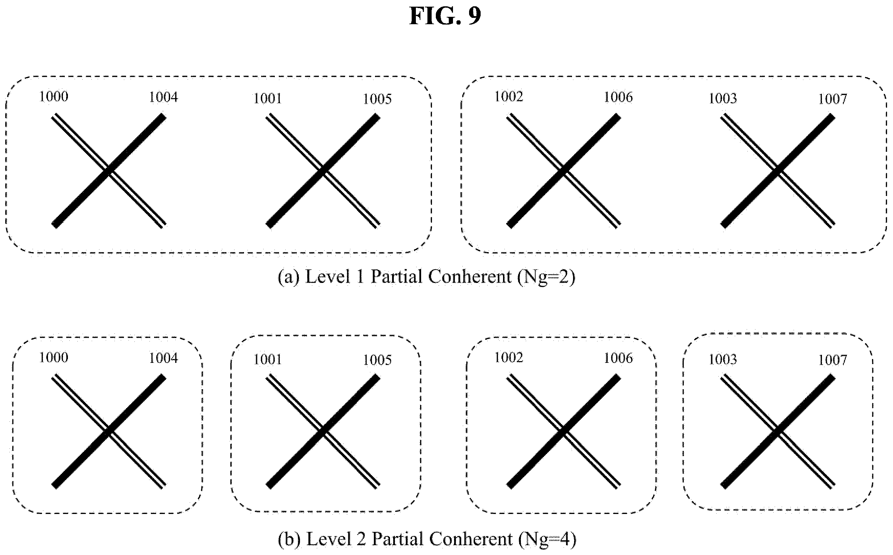

FIG. 9 illustrates a partial coherent 8Tx panel structure. An Ng value is the number of antenna groups of coherency and may be reported as the capability of the UE. In Proposal 1 and Proposal 1-1, the UE may report information about transmittable power for each panel or whether the full power operation is possible.

This may be extended such that when a TPMI for each panel is indicated to/configured for the UE, the UE may report a TPMI group for which the full power operation is possible in a panel-wise/antenna group-wise manner. For example, the UE may report panel1=G1 and panel2=G2, and different power scaling values may be set/indicated.

In this case, beta = beta1 * beta2 wherein beta1 may function to match a power ratio for each panel, and beta2 may be a value for a power ratio within a panel. Therefore, when the full power operation is possible, beta2 is set to 1, and when the full power operation is not possible, it is an X value or 'number of non-zero PUSCH ports/number of SRS ports in indicated SRS resource' according to Proposal 1 or Proposal 1-1. Beta1, which is a value that provides a power ratio for each panel, may be mainly set to 1/Ng, or may give a separate ratio so that each panel has a different value. For example, Beta1 may be set/indicated as 1/4 for panel 1 and 3/4 for panel 2. 1/Ng may be set as a default value, or a separate flag may be set to report whether the same power is allowed to be assumed for each panel.

In the case of the panel-specific (soft) full power capability report, a panel may not be clearly specified in the specifications. Therefore, when the UE reports a first TPMI set and a second TPMI set, the first and second TPMI sets may correspond to a first SRS resource set or a second SRS resource set, and a correspondence rule may be implicitly indicated as above, or the BS may explicitly indicate the mapping.

Further, the mapping may be performed such that they correspond to two SRS resources within one set, rather than at the set level. That is, for example, when Ng=2, two 4-port SRS resources may be configured in one SRS resource set, and in this case, the first SRS resource and the second SRS resource correspond to the first TPMI set and the second TPMI set, respectively. In the above mapping rule, it may be agreed that the mapping is performed in the order of highest/lowest SRS resource (set) ids or in the order of BS configuration/triggering within each set.

In a recent standardization meeting, an agreement was made regarding the full power mode, as illustrated in Table 10.

[Table 10]

For full power PUSCH transmission by an 8TX UE, confirm the Working Assumption for Mode1 with updates:- *To support full power transmission with Model, Rel-16 Mode1 (fullPowerMode1) is re-used.FFS: identification of precoders per rank / per NgFor* full power PUSCH transmission by an 8TX UE, confirm the Working Assumption for Mode2 with updates:- To support full power transmission with Mode2, Rel-16 Mode2 (fullPowerMode2) is re-used.definition of precoder groups (G0, G1, ...)enhancements for SRS configuration

Additionally, in the case of a non-coherent codebook, it was agreed that all possible port selection combinations are supported (Agreement: For non-coherent UL precoding by an 8TX UE, All 255 combinations from 8 non-coherent rank1 precoders are supported). Therefore, there are no TPMIs for which full power transmission is possible in rank 1 to rank 7, and a technique for full power transmission in rank 1 to 7 is required.

Codebook configurations for partial coherent codebooks with Ng=2 and Ng=4 and layer split combinations considered when the codebooks are configured are illustrated in Tables 11 and 12 below. Table 11 illustrates the number of codepoints for 8Tx partial coherent CBs per rank with Ng=2. Table 12 illustrates the number of codepoints for 8Tx partial coherent CBs per rank with Ng=4.

In the case of the partial coherent codebook with Ng=2, there is no full coherent TPMI only in rank 1, and for Ng=4, there is no full coherent TPMI in rank 1 to rank 3.

[Table 11]

| Rank | All layers in one Antenna Group | Layers split across 2 Antenna Groups | # of codepoints |
|------|--------------------------------|--------------------------------------|-----------------|
| 1 | (1,0), (0,1) | - | 16*2 = 32 |
| 2 | (2,0), (0,2) | - | 8*2 = 16 |
| 2 | - | (1,1) | 16*16 = 256 |
| 3 | (3,0), (0,3) | - | 4*2 =8 |
| 3 | - | (1,2), (2,1) | 8*16 * 2 = 256 |
| 4 | (4,0), (0,4) | - | 2*2 = 4 |
| 4 | - | (2,2) | 8*8 = 64 |
| 5 | - | [(2,3), (3,2)] | 8*4 *2= 64 |
| 6 | - | (3,3) | 4*4 = 16 |
| 7 | - | [(3,4), (4,3)] | 4*2 *2 =16 |

(continued)

| Rank | All layers in one Antenna Group | Layers split across 2 Antenna Groups | # of codepoints |
|---|---|---|---|
| 8 | - | (4,4) | 2*2=4 |

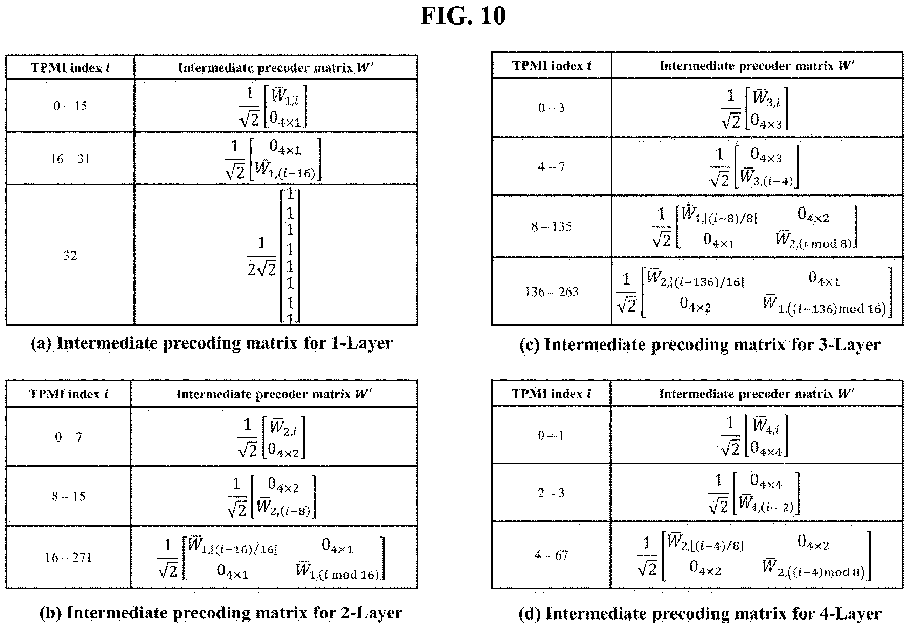

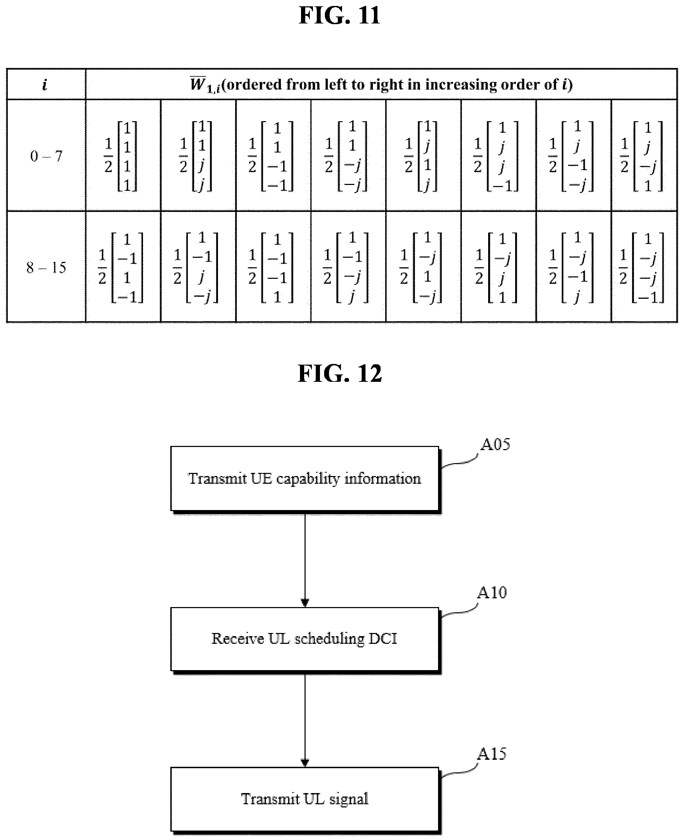

For example, a TPMI codebook for a UL 8-Tx transmission may include a combination of an intermediate precoding matrix and sub-matrices. For example, in FIG. 10, (a), (b), (c), and (d) represent intermediate 1-, 2-, 3-, and 4-layer precoding matrices, respectively. The sub-matrices included in an intermediate precoding matrix may also be defined for each layer, and FIG. 11 illustrates 16 sub-matrices included in a 1-layer intermediate precoding matrix, that is, FIG. 10 (a). Therefore, since (1,0) means 16 TPMIs, and (0,1) means 16 TPMIs in Table 11, the total number of codepoints for rank 1 is 32.

[Table 12]

| Rank | All layers in one Antenna Group | Layers split across 4 Antenna Groups | # of codepoints |
|---|---|---|---|
| 1 | (1,0,0,0), (0,1,0,0), (0,0,1,0), (0,0,0,1) | - | 4*4 = 16 |
| 2 | (2.0.0.0). (0.2.0.0). (0.0.2.0). (0.0.0.2) | - | 2*4 = 8 |
| 2 | - | Transmission by 2 of the 4 antenna groups: (1,1,0,0), (1,0,1,0), (1,0,0,1)(0,1,1,0), (0,1,0,1), (0,0,1,1) | 4*4*6 = 96 |
| 3 | - | Transmission by 2 of the 4 antenna groups: (2,1,0,0), (2,0,1,0), (2,0,0,1), (0,2,1,0), (0,2,0,1), (0,0,2,1), Transmission by 3 of the 4 antenna groups: (1,1,1,0). (1,1,0,1), (1,0,1,1), (0,1,1,1) | 4*2*6 = 484*4*4 = 256 |
| 4 | - | (1,1,1,1) | 4*4*4*4 = 256 |
| 4 | - | Transmission by 2 of the 4 antenna groups: (2,2,0,0), (2,0,2,0), (2,0,0,2)(0,2,2,0), (0,2,0,2), (0,0,2,2) | 2*2*6 = 24 |
| 5 | - | Transmission by 3 of the antenna groups:(2,0,2,1), (0,2,2,1), Transmission by 4 of the 4 antenna groups: (1,1,2,1) | 2*2*4*2 = 324*4*2*4 = 128 |
| 6 | - | Transmission by 3 of the 4 antenna groups: (2,2,2,0), (2,0,2,2) Transmission by 4 of the 4 antenna groups: (2,1,2,1) | 2*2*2*2 = 162*4*2*4 = 64 |
| 7 | - | Transmission by 4 of the 4 antenna groups: (2,1,2,2) | 2*2*2*4 = 32 |
| 8 | - | (2, 2, 2, 2) | 2*2*2*2=16 |

A method of performing a full power transmission based on the non/partial coherent 8Tx codebook described above is proposed.

## Proposal 2

When full power mode 1 is performed based on an 8Tx non-coherent codebook, a single TPMI (e.g., a highest index/lowest index) for each rank of rank1-X of a full coherent codebook is added to the non-coherent codebook to support full power mode 1. The X value may be pre-agreed upon (e.g., 1, 2, 3, or 4) or set for the UE by the BS.

The reason for restricting the rank to a specific rank in Proposal 2 is that full power is used in 8Tx for the purpose of coverage enhancement, but a large rank is intended mainly to increase system throughput rather than enhance coverage, which means that the geometry of the UE is more likely to have a good SINR than coverage. Therefore, it is not desirable to use the full power mode even in all full power-uncapable ranks, for example, rank 7.

Equation 3 is an example of a full coherent codebook for rank 1, corresponding to the lowest index.

[Equation 3]

$$\frac{1}{2\sqrt{2}}\begin{bmatrix}1\\1\\1\\1\\1\\1\\1\\1\end{bmatrix} \text{ for rank 1}$$

The full coherent codebook for 8Tx UL includes a DL 8Tx codebook based on an oversampling factor (1,1) based on the agreement in Table 13.

[Table 13]

For fully coherent uplink precoding by an 8TX UE, based on NR Rel-15 single panel DL Type I codebook, the following pairs of (N1, N2) values are supported,- (N1, N2) = (4, 1)-(N1, N2) = (2, 2) A pair of (N1, N2) can be configured with subject to UE capability. Fully coherent uplink precoding by an 8TX UE, based on NR Rel-15 single panel DL Type I codebook- Precoding matrices generated according to (O1, O2) = (1, 1) is supported-Further study additional support of precoding matrices generated according to (O1, O2) where O1>1 or O2>1 (Subject to UE capability)- FFS: Different O1, O2 values for different ranks

**(1) Proposal 2-1. When full power mode 1 is performed based on an 8Tx partial-coherent codebook with Ng=2, Y TPMIs (e.g., highest index/lowest index) for each rank for rank 1 of the full coherent codebook is added to a partial-coherent codebook with Ng=2 to support full power mode 1.**

In the case of the partial-coherent codebook with Ng=2, the antenna ports of each port group may maintain antenna coherency, and x and y in Equation 4 below represent an example in which two antenna groups are mapped to PUSCH ports. Since x and y may maintain coherency, a diversity gain may be obtained accordingly, and an example of a full coherent codebook corresponding to this is Equation 5. Y is a value set by the BS or a pre-agreed value, and for the convenience of implementation, Y is fixed to 1 and only the first vector of Equation 5 may be supported.

[Equation 4]

$$\frac{1}{2\sqrt{2}}\begin{bmatrix}x_1\\x_2\\y_1\\y_2\\x_3\\x_4\\y_3\\y_4\end{bmatrix}$$

[Equation 5]

$$\frac{1}{2\sqrt{2}}\begin{bmatrix}1\\1\\1\\1\\1\\1\\1\\1\end{bmatrix}, \frac{1}{2\sqrt{2}}\begin{bmatrix}1\\1\\1\\1\\j\\j\\j\\j\end{bmatrix}, \frac{1}{2\sqrt{2}}\begin{bmatrix}1\\1\\1\\1\\-1\\-1\\-1\\-1\end{bmatrix}, \frac{1}{2\sqrt{2}}\begin{bmatrix}1\\1\\1\\1\\-j\\-j\\-j\\-j\end{bmatrix}$$

**(2) Proposal 2-2. When full power mode 1 is performed based on an 8Tx partial-coherent codebook with Ng=4, Y TPMIs (e.g., highest index/lowest index) for each rank of rank1/2/3 of the full coherent codebook (the number of TPMIs may be different for each rank) are added to a partial-coherent codebook with Ng=4 to support full power mode 1.**

PUSCH port mapping of a coherent group with Ng=4 is based on Equation 6 below. That is, there are four antenna groups, x, y, w, and z, and two ports in each antenna group maintain coherency.

[Equation 6]

$$\frac{1}{2\sqrt{2}}\begin{bmatrix}x_1\\y_1\\w_1\\z_1\\x_2\\y_2\\w_2\\z_2\end{bmatrix}$$

For rank 1 in Proposal 2-2, Proposal 2-1 may be reused as it is.

For ranks 2 and 3 in Proposal 2-2, Y (e.g., 1, 2, or 4) may be selected from the full coherent codebook to support full power mode 1. However, in the case of the antenna group shape, it may be configured with a subset of the partial-coherent codebook with Ng=2, and therefore, the full power capable TPMI(s) of ranks 2 and 3 are characteristically provided from the partial coherent codebook with Ng=2. In this case, specific Y TPMIs in the rank 2 layer split case (1,1) and rank 3 layer split case (1,2) or (2,1) in Table 2 may be added to a new codebook subset to support full power mode 1.

In the layer split case, a combination corresponding to layer 1 may be 8Tx TPMIs configured based on the 4Tx codebook of Table 14 below.

[Table 14]

$$\frac{1}{2}\begin{bmatrix}1\\1\\1\\1\end{bmatrix} \quad \frac{1}{2}\begin{bmatrix}1\\1\\j\\j\end{bmatrix} \quad \frac{1}{2}\begin{bmatrix}1\\1\\-1\\-1\end{bmatrix} \quad \frac{1}{2}\begin{bmatrix}1\\1\\-j\\-j\end{bmatrix}$$

Alternatively, it may be configured that the full power mode is supported for up to a specific rank by imposing a rank restriction in Proposal 2-2, like Proposal 2, and the specific rank may be, for example, rank 1 or rank 2.

In Proposal 2 and Proposal 2-2, the full power mode 1 supported rank may be determined based on the capability of the UE.

In full power mode 2, the UE reports a full power capable TPMI group by reporting its capability or operates using antenna virtualization, and in this case, # of SRS resources supported is reported by the UE capability. In particular, when the UE operates based on the TPMI group, full power capable TPMIs in the above-described non/partial codebook should be grouped. As described before, there are too many possible combinations, and supporting them all requires too much capability signaling overhead. Simply, for 8Tx ports, full power capable ports may be reported by a bitmap. In this case, 8 bits are required per band combination, which is too large compared to a legacy maximum of 3 bits.

Therefore, a method of reusing/extending a legacy table is proposed.

### Proposal 3

For example, for the partial coherent UE/codebook, the UE may report bit information for a full power capable TPMI group to the BS.

More specifically, the UE may configure a bitmap per Ng value or configure bits for a corresponding Ng to report information about a full power capable TPMI group to the BS. For example, a TPMI group supporting full power mode 2 may be reported by using a 2-bit bitmap for Ng=2 and a 4-bit bitmap for Ng=4.

For example, in the case of a partial coherent codebook with Ng=2, rank1 is required, and in this case, the UE may map TPMIs configured by the layer split as one group and represent them by bit information (e.g., 2 bits). For example, when the bit information is a first value (e.g., when the bitmap is "10"), it is understood that TPMIs corresponding to (1,0), (2,0), (3,0), and (4,0) in Table 15 below support full power mode 2, and when the bit information is a second value (e.g., when the 2-bit bitmap is "01"), it is understood that TPMI groups corresponding to (0,1), (0,2), (0,3), and (0,4) support full power mode 2.

[Table 15]

| Rank | All layers in one Antenna Group |
|---|---|
| 1 | (1,0), (0,1) |
| 2 | (2,0), (0,2) |
| 2 | - |
| 3 | (3,0), (0,3) |
| 3 | - |
| 4 | (4,0), (0,4) |

For example, a TPMI codebook for UL 8-Tx transmission may include a combination of an intermediate precoding matrix and sub-matrices. For example, in FIG. 10, (a), (b), (c), and (d) represent 1-, 2-, 3-, and 4-layer intermediate precoding matrices, respectively. The sub-matrices included in an intermediate precoding matrix may also be defined for respective layers, and FIG. 11 illustrates sub-matrices included in an 1-layer intermediate precoding matrix, that is, (a) of FIG. 10. For example, TPMI index 0 in (a) of FIG. 10 is for 1-layer (rank 1), and a TPMI such as Equation 7 may be derived by combining sub-matrix index 1 of FIG. 11 with TPMI index 0.

[Equation 7]

$$1/2\sqrt{2} \begin{bmatrix} 1 \\ 1 \\ 1 \\ 1 \\ 0 \\ 0 \\ 0 \\ 0 \end{bmatrix}$$

(i) In Table 15, (1,0) means TPMI indexes 0 to 15 of FIG. 10(a), and (0,1) in Table 15 means TPMI indexes 16 to 31 of FIG. 10(a).

(ii) In Table 15, (2,0) means TPMI indexes 0 to 7 of FIG. 10(b), and (0,2) in Table 15 means TPMI indexes 8 to 15 of FIG. 10(b).

(iii) In Table 15, (3,0) means TPMI indexes 0 to 3 of FIG. 10(c), and (0,3) in Table 15 means TPMI indexes 4 to 7 of FIG. 10(c).

(ii) In Table 15, (4,0) means TPMI indexes 0 and 1 of FIG. 10(d), and (0,4) in Table 15 means TPMI indexes 2 and 3 of FIG. 10(d).

When the UE reports bit information having a first value as the UE capability for full power transmission for 8-Tx, and a TPMI indicated by the BS through UL scheduling DCI belongs to the TPMIs corresponding to (1,0), (2,0), (3,0), and (4,0) in Table 15, the UE may perform transmission at full power ($\beta$=1).

When the UE reports bit information having the first value as the UE capability for full power transmission for 8-Tx, and the TPMI indicated by the BS through the UL scheduling DCI does not belong to the TPMIs corresponding to (1,0), (2,0), (3,0), and (4,0) in Table 15, the UE may transmit at power determined based on '$\beta$= number of non-zero PUSCH ports/number of SRS ports in indicated SRS resource'.

When the UE reports bit information having a second value as the UE capability for full power transmission for 8-Tx, and a TPMI indicated by the BS through the UL scheduling DCI belongs to the TPMIs corresponding to (0,1), (0,2), (0,3), and (0,4) in Table 15, the UE may perform transmission at full power ($\beta$=1).

When the UE reports bit information having the second value as the UE capability for full power transmission for 8-Tx, and the TPMI indicated by the BS through the UL scheduling DCI does not belong to the TPMIs corresponding to (0,1), (0,2), (0,3), and (0,4) in Table 15, the UE may perform transmission at power determined based on '$\beta$=number of non-zero PUSCH ports/number of SRS ports in indicated SRS resource'.

This may be extended such that for Ng=4, an indication is made by a 4-bit bitmap. For example, TPMIs underlined in Table 12 are indicated by a 4-bit bitmap. For example, when the bitmap is "1000", TPMIs corresponding to (1,0,0,0)/(2,0,0,0) may be mapped to a TPMI group supporting full power mode 2, and when the bitmap is "1010", TPMIs with layer split corresponding to (1,0,1,0)/(2,0,2,0)/(2,0,1,0) may form a full power TPMI group. When the bitmap indicates "1010", particularly when an antenna group corresponding to the first 1 is all full rate PAs and an antenna group corresponding to the third 1 is not full rate PAs, the TPMIs corresponding to (1,0,0,0) and (2,0,0,0) may also be supported, and the TPMIs corresponding to (1,0,1,0)/(2,0,2,0)/(2,0,1,0) may also be supported. In this case, the following methods may be considered.

- Method 1: A plurality of 4-bit bitmaps are reported. However, the number of bitmaps that may be reported is limited to a maximum of Z (e.g., Z=2).
- Method 2: Ng or the number of ports with full rated PAs is additionally reported. In the case of Ng or ports with full rate PAs, it is assumed that Ng/ports with full rate PA are arranged in ascending/descending order.

Ng with full rate PAs means, for example, that the number of ports forming Ng is 2, and to satisfy PC3=23dBm, each of the two ports in Ng should have at least 20dBm. However, when a full rated PA exists for each port, it means that each port has 23dBm.

In the case of a non-coherent codebook, a specific antenna group supporting full power mode 2 is configured as a table similarly to the legacy case, but only for only up to a specific rank (e.g., rank 1, 2, 3, or 4) rather than supporting all of rank 1 to rank 7. The reason for this has been described in Proposal 2. Table 16 below is an example of supporting full power mode 2 for up to rank 3.

When the above Ng-based bitmap and/or Ng/the number of ports with full rated PAs is reported, the BS may additionally recognize a non-coherent codebook corresponding to the number of ports/Ng as full power capable TPMIs. For example, when a UE with a partial coherent codebook with Ng=4 reports 1000 and full rate PA Ng=2, the UE may be understood as supporting G1. Therefore, the size of the table for the non-coherent codebook is advantageously minimized.

[Table 16]

| TPMI group | |
|---|---|
| G0 | $\dfrac{1}{2\sqrt{2}}\begin{bmatrix}1\\0\\0\\0\\0\\0\\0\\0\end{bmatrix}$ |
| G1 | $\dfrac{1}{2\sqrt{2}}\begin{bmatrix}1\\0\\0\\0\\0\\0\\0\\0\end{bmatrix}, \dfrac{1}{2\sqrt{2}}\begin{bmatrix}0\\0\\0\\0\\1\\0\\0\\0\end{bmatrix}, \dfrac{1}{2\sqrt{2}}\begin{bmatrix}1&0\\0&0\\0&0\\0&1\\0&0\\0&0\\0&0\\0&0\end{bmatrix},$ |
| G2 | $\dfrac{1}{2\sqrt{2}}\begin{bmatrix}1\\0\\0\\0\\0\\0\\0\\0\end{bmatrix}, \dfrac{1}{2\sqrt{2}}\begin{bmatrix}0\\1\\0\\0\\0\\0\\0\\0\end{bmatrix}, \dfrac{1}{2\sqrt{2}}\begin{bmatrix}0\\0\\1\\0\\1\\0\\0\\0\end{bmatrix}, \dfrac{1}{2\sqrt{2}}\begin{bmatrix}1&0\\0&1\\0&0\\0&0\\0&0\\0&0\\0&0\\0&0\end{bmatrix}, \dfrac{1}{2\sqrt{2}}\begin{bmatrix}1&0\\0&0\\0&1\\0&0\\0&0\\0&0\\0&0\\0&0\end{bmatrix}, \dfrac{1}{2\sqrt{2}}\begin{bmatrix}0&0\\1&0\\0&1\\0&0\\0&0\\0&0\\0&0\\0&0\end{bmatrix}, \dfrac{1}{2\sqrt{2}}\begin{bmatrix}1&0&0\\0&1&0\\0&0&1\\0&0&0\\0&0&0\\0&0&0\\0&0&0\\0&0&0\end{bmatrix},$ |

Additionally, the configuration and total payload of the partial coherent codebook are 736 for Ng=2 and 992 for Ng=4, requiring a total of 10 bits according to Tables 11 and 12. Therefore, since this has larger payload than the already agreed non-coherent codebook, 8 bits, it is necessary to reduce it to 8 or 9 bits. For this purpose, the size of a candidate 2Tx/4Tx codebook corresponding to a specific layer split may be reduced.

For example, when Ng=2, a combination of (X,Y) is configured, and it may be agreed that the number of codebooks corresponding to Y is smaller than the number of codebooks corresponding to X.

For example, when X/Y=1, it is configured from 4Tx codebooks in Table 17 below, and for X, all or some of the 4Tx codebooks below (e.g., 16/8) may be used, while for Y, only a smaller number of (e.g. 2 or 4) codebooks may be used.

[Table 17]

| | | | |
|---|---|---|---|
| $\dfrac{1}{2}\begin{bmatrix}1\\1\\1\\1\end{bmatrix}$ | $\dfrac{1}{2}\begin{bmatrix}1\\1\\j\\j\end{bmatrix}$ | $\dfrac{1}{2}\begin{bmatrix}1\\1\\-1\\-1\end{bmatrix}$ | $\dfrac{1}{2}\begin{bmatrix}1\\1\\-j\\-j\end{bmatrix}$ |
| $\dfrac{1}{2}\begin{bmatrix}1\\j\\1\\j\end{bmatrix}$ | $\dfrac{1}{2}\begin{bmatrix}1\\j\\j\\-1\end{bmatrix}$ | $\dfrac{1}{2}\begin{bmatrix}1\\j\\-1\\-j\end{bmatrix}$ | $\dfrac{1}{2}\begin{bmatrix}1\\j\\-j\\1\end{bmatrix}$ |

(continued)

$$\frac{1}{2}\begin{bmatrix}1\\-1\\1\\-1\end{bmatrix} \quad \frac{1}{2}\begin{bmatrix}1\\-1\\j\\-j\end{bmatrix} \quad \frac{1}{2}\begin{bmatrix}1\\-1\\-1\\1\end{bmatrix} \quad \frac{1}{2}\begin{bmatrix}1\\-1\\-j\\j\end{bmatrix}$$

$$\frac{1}{2}\begin{bmatrix}1\\-j\\1\\-j\end{bmatrix} \quad \frac{1}{2}\begin{bmatrix}1\\-j\\j\\1\end{bmatrix} \quad \frac{1}{2}\begin{bmatrix}1\\-j\\-1\\j\end{bmatrix} \quad \frac{1}{2}\begin{bmatrix}1\\-j\\-j\\-1\end{bmatrix}$$

Likewise, for Ng=4, a partial coherent codebook with Ng=4 may be configured by a combination (X, Y, W, Z) in which, for example, specific X and W have a higher granularity and Y and Z have a lower granularity.

Proposals 1, 1-1, 2, 2-1, 2-2, and 3 and the above embodiments may be used alone or in combination.

FIG. 12 is a flowchart illustrating a method of transmitting a signal by a UE in a wireless communication system according to an embodiment.

Referring to FIG. 12, the UE may transmit UE capability information related to eight transmission antenna ports of the UE (A05).

The UE may receive DL control information (DCI) for UL scheduling including information about a TPMI (A10).

The UE may transmit a UL signal based on the DCI (A15).

The UE capability information may include information for reporting an antenna port group supporting full power transmission among a plurality of antenna port groups configured based on the eight transmission antenna ports.

Transmission power of the UL signal may be determined based on whether the TPMI obtained through the DCI is related to the reported antenna port group.

The information for reporting the antenna port group is bit information, and the bit information may be set to a first value to report that a first antenna port group supports the full power transmission, or may be set to a second value to report that a second antenna port group supports the full power transmission.

Based on the TPMI obtained through the DCI being one of TPMIs related to the reported antenna port group, a power scaling value of the UL signal may be set to 1.

Based on the TPMI obtained through the DCI belonging to TPMIs related to only another antenna port group other than the TPMIs related to the reported antenna port group, the power scaling value of the UL signal may be set to less than 1.

The number of the plurality of antenna port groups may be 2.

The TPMIs related to the reported antenna port group may include (i) 16 TPMIs among TPMIs of a codebook for 1-layer transmission, (ii) 8 TPMIs among TPMIs of a codebook for 2-layer transmission, (iii) 4 TPMIs among TPMIs of a codebook for 3-layer transmission, and (iv) 2 TPMIs among TPMIs of a codebook for 4-layer transmission.

The information for reporting the antenna port group supporting the full power transmission may be bit information reporting a group of TPMIs including the antenna port group.

The transmission power of the UL signal is determined based on a larger value of 'X' and 'Y', where 'X' is a parameter that the UE reports to the network, and 'Y' may be a ratio between the number of SRS antenna ports and the number of non-zero PUSCH antenna ports.

'X' may be any one of 1, 1/2, 1/4, 3/4, and 1/8.

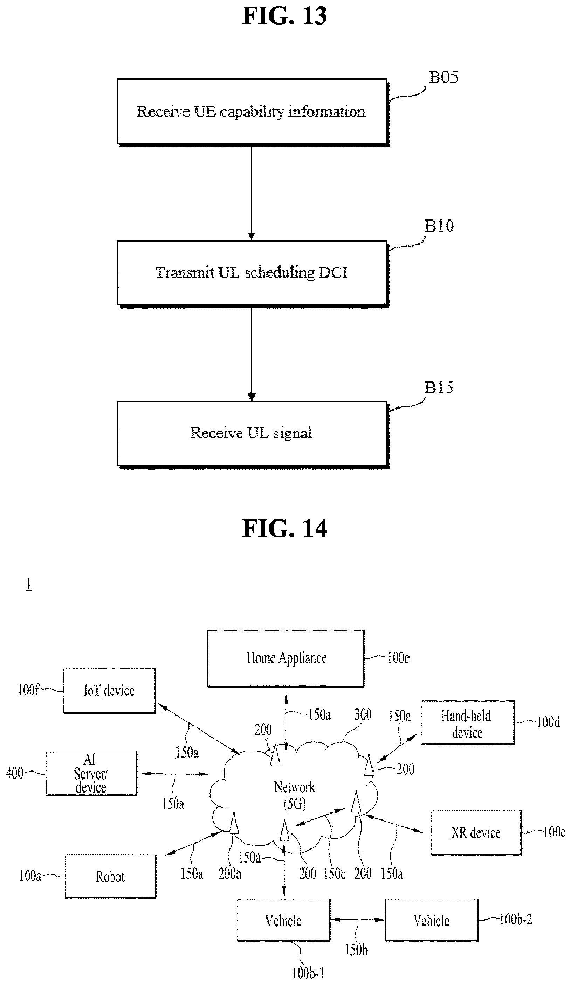

FIG. 13 is a flowchart illustrating a method of receiving a signal by a BS in a wireless communication system according to an embodiment.

Referring to FIG. 13, the BS may receive, from a UE, UE capability information related to eight transmission antenna ports of the UE (B05).

The BS may transmit DCI for UL scheduling including information about a TPMI (B10).

The BS may receive a UL signal based on the DCI (B15).

The UE capability information may include information for reporting an antenna port group supporting full power transmission among a plurality of antenna port groups configured based on the eight transmission antenna ports.

Transmission power of the UL signal may be determined based on whether the TPMI indicated by the DCI is related to the reported antenna port group.

The information for reporting the antenna port group is bit information, and the bit information may be set to a first value to report that a first antenna port group supports the full power transmission, or may be set to a second value to report that a second antenna port group supports the full power transmission.

Based on the TPMI obtained through the DCI being one of TPMIs related to the reported antenna port group, a power scaling value of the UL signal may be set to 1.

Based on the TPMI obtained through the DCI belonging to TPMIs related to only another antenna port group other than the TPMIs associated with the reported antenna port group, the power scaling value of the UL signal may be set to less than 1.

The number of the plurality of antenna port groups may be 2.

The TPMIs related to the reported antenna port group may include (i) 16 TPMIs among TPMIs of a codebook for 1-layer transmission, (ii) 8 TPMIs among TPMIs of a codebook for 2-layer transmission, (iii) 4 TPMIs among TPMIs of a codebook for 3-layer transmission, and (iv) 2 TPMIs among TPMIs of a codebook for 4-layer transmission.

The information for reporting the antenna port group supporting the full power transmission may be bit information reporting a group of TPMIs including the antenna port group.

The transmission power of the UL signal is determined based on a larger value of 'X' and 'Y', where 'X' is a parameter that the BS receives from the UE, and 'Y' may be a ratio between the number of SRS antenna ports and the number of non-zero PUSCH antenna ports.

'X' may be any one of 1, 1/2, 1/4, 3/4, and 1/8.

FIG. 14 illustrates a communication system 1 applied to the present disclosure.

Referring to FIG. 14, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

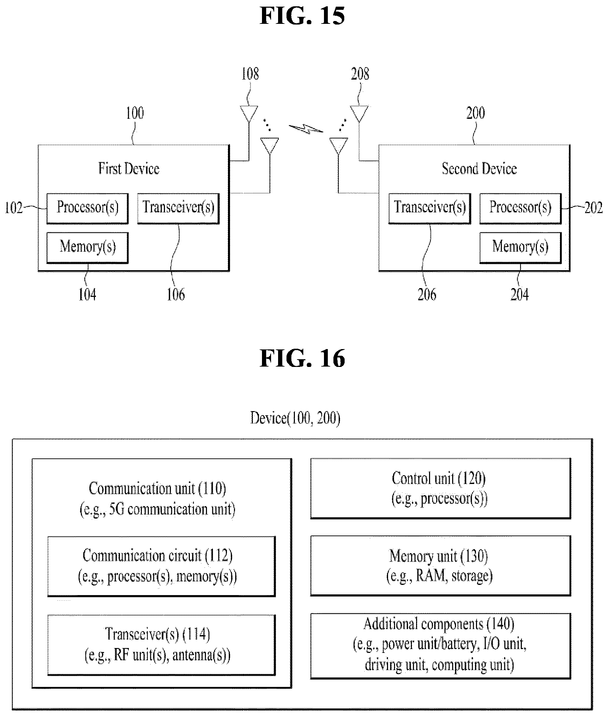

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

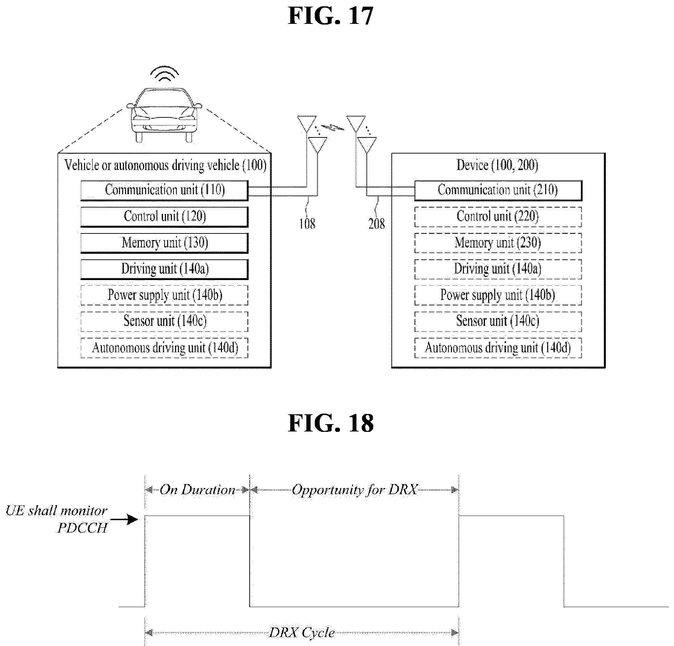

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 18 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 18, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1.  A method of transmitting a signal by a user equipment (UE) in a wireless communication system, the method comprising:

    transmitting UE capability information related to eight transmission antenna ports of the UE;
    receiving downlink control information (DCI) for uplink scheduling including information about a transmission precoding index (TPMI); and
    transmitting an uplink signal based on the DCI,
    wherein the UE capability information includes information for reporting an antenna port group supporting full power transmission among a plurality of antenna port groups configured based on the eight transmission antenna ports, and
    wherein transmission power of the uplink signal is determined based on whether the TPMI obtained through the DCI is related to the reported antenna port group.

2.  The method of claim 1, wherein the information for reporting the antenna port group is bit information, and wherein the bit information is set to a first value to report that a first antenna port group supports the full power transmission or to a second value to report that a second antenna port group supports the full power transmission.

3.  The method of claim 1, wherein based on the TPMI obtained through the DCI being one of TPMIs related to the reported antenna port group, a power scaling value of the uplink signal is set to 1.

4.  The method of claim 1, wherein based on the TPMI obtained through the DCI belonging to TPMIs related only to an antenna port group other than the reported antenna port group, a power scaling value of the uplink signal is set to less than 1.

5.  The method of claim 1, wherein the number of the plurality of antenna port groups is 2.

6.  The method of claim 5, wherein TPMIs related to the reported antenna port group include (i) 16 TPMIs among TPMIs of a codebook for 1-layer transmission, (ii) 8 TPMIs among TPMIs of a codebook for 2-layer transmission, (iii) 4 TPMIs among TPMIs of a codebook for 3-layer transmission, and (iv) 2 TPMIs among TPMIs of a codebook for 4-layer transmission.

7.  The method of claim 1, wherein the information for reporting the antenna port group supporting the full power transmission is bit information for reporting a group of TPMIs including the antenna port group.

8.  The method of claim 1, wherein the transmission power of the uplink signal is determined based on a larger value of 'X' and 'Y',

wherein 'X' is a parameter reported to a network by the UE, and
wherein 'Y' is a ratio between a number of sounding reference signal (SRS) antenna ports and a number of non-zero physical uplink shared channel (PUSCH) antenna ports.

9. The method of claim 8, wherein 'X' is any one of 1, 1/2, 1/4, 3/4, and 1/8.

10. A computer-readable recording medium storing a program for performing the method of claim 1.

11. A device for wireless communication, the device comprising:

a memory configured to store instructions; and
a processor configured to perform operations by executing the instructions,
wherein the operations of the processor include:

transmitting device capability information related to eight transmission antenna ports;
receiving downlink control information (DCI) for uplink scheduling including information about a transmission precoding index (TPMI); and
transmitting an uplink signal based on the DCI,
wherein the device capability information includes information for reporting an antenna port group supporting full power transmission among a plurality of antenna port groups configured based on the eight transmission antenna ports, and
wherein transmission power of the uplink signal is determined based on whether the TPMI obtained through the DCI is related to the reported antenna port group.

12. The device of claim 10, further comprising a transceiver,
wherein the device is a user equipment (UE) operating in a wireless communication system.

13. The device of claim 10, wherein the device is a processing device configured to control a UE operating in a wireless communication system.

14. A method for receiving a signal by a base station (BS) in a wireless communication system, the method comprising:

receiving user equipment (UE) capability information related to eight transmission antenna ports from a UE;
transmitting downlink control information (DCI) for uplink scheduling including information about a transmission precoding index (TPMI); and
receiving an uplink signal based on the DCI,
wherein the UE capability information includes information for reporting an antenna port group supporting full power transmission among a plurality of antenna port groups configured based on the eight transmission antenna ports, and
wherein transmission power of the uplink signal is determined based on whether the TPMI obtained through the DCI is related to the reported antenna port group.

15. A base station (BS) for wireless communication, the BS comprising:

a memory configured to store instructions; and
a processor configured to perform operations by executing the instructions,
wherein the operations of the processor include:

receiving user equipment (UE) capability information related to eight transmission antenna ports from a UE;
transmitting downlink control information (DCI) for uplink scheduling including information about a transmission precoding index (TPMI); and
receiving an uplink signal based on the DCI,
wherein the UE capability information includes information for reporting an antenna port group supporting full power transmission among a plurality of antenna port groups configured based on the eight transmission antenna ports, and
wherein transmission power of the uplink signal is determined based on whether the TPMI obtained through the DCI is related to the reported antenna port group.

# FIG. 1

Initial Cell Search — PSS/SSS & [DLRS] & PBCH — S101

System Information Reception — PDCCH/PDSCH (BCCH) — S102

Random Access Procedure — PRACH — S103, PDCCH/PDSCH — S104, PRACH — S105, PDCCH/PDSCH — S106

General DL/UL Tx/Rx S108 — PDCCH/PDSCH — S107, PUSCH/PUCCH

• DL/UL ACK/NACK
• UE CQI/PMI/Rank Report using PUSCH and PUCCH

# FIG. 2

One Frame (10ms)

Half-Frame (5ms) — Half-Frame (5ms)

Subframe 0 (1ms) ... Subframe 4 (1ms) — Subframe 5 (1ms) ... Subframe 9 (1ms)

Subframe (1ms)

15KHz — Slot (14 symbols) — 1ms

30KHz — Slot 0 (14 symbols) — Slot 1 — 500us

60KHz — Slot 0 (14 symbols) — Slot 1 — Slot 2 — Slot 3 — 250us

120KHz — Slot 0 (14 symbols) — Slot 1 — Slot 2 — Slot 3 — Slot 4 — Slot 5 — Slot 6 — Slot 7 — 125us

# FIG. 3

# FIG. 4

Long PUCCH

PDCCH

Gap

PDSCH/PUSCH

Short PUCCH

Long PUCCH

One slot

f

t

# FIG. 5

DL assingment-to-PDSCH offset (K0)

PDCCH

PDSCH

PUCCH

slot

PDSCH-to-HARQ-ACK reporting offset (K1)

# FIG. 6

UL grant-to-PUSCH offset (K2)

| PDCCH | | | | | PUSCH | | |

# FIG. 7

| UE | | BS |

Configuration Information related to CSI (710)

RS(e.g., CSI-RS) (720)

Calculate CSI (730)

Report CSI (740)

# FIG. 8

TRP 1

Layer Group #1
for CW#1

TRP 2

Layer Group #1
for CW#2

UE 1

**(a)**

TRP 1

Layer Group #1
for CW#1

TRP 2

Layer Group #2
for CW#2

UE 1

**(b)**

# FIG. 9

(a) Level 1 Partial Conherent (Ng=2)

(b) Level 2 Partial Conherent (Ng=4)

# FIG. 10

| TPMI index $i$ | Intermediate precoder matrix $W'$ |
|---|---|
| $0 - 15$ | $\dfrac{1}{\sqrt{2}}\begin{bmatrix}\overline{W}_{1,i}\\0_{4\times1}\end{bmatrix}$ |
| $16 - 31$ | $\dfrac{1}{\sqrt{2}}\begin{bmatrix}0_{4\times1}\\\widetilde{W}_{1,(i-16)}\end{bmatrix}$ |
| $32$ | $\dfrac{1}{2\sqrt{2}}\begin{bmatrix}1\\1\\1\\1\\1\\1\\1\\1\end{bmatrix}$ |

**(a) Intermediate precoding matrix for 1-Layer**

| TPMI index $i$ | Intermediate precoder matrix $W'$ |
|---|---|
| $0 - 7$ | $\dfrac{1}{\sqrt{2}}\begin{bmatrix}\overline{W}_{2,i}\\0_{4\times2}\end{bmatrix}$ |
| $8 - 15$ | $\dfrac{1}{\sqrt{2}}\begin{bmatrix}0_{4\times2}\\\overline{W}_{2,(i-8)}\end{bmatrix}$ |
| $16 - 271$ | $\dfrac{1}{\sqrt{2}}\begin{bmatrix}\overline{W}_{1,\lfloor(i-16)/16\rfloor} & 0_{4\times1}\\0_{4\times1} & \overline{W}_{1,(i\bmod 16)}\end{bmatrix}$ |

**(b) Intermediate precoding matrix for 2-Layer**

| TPMI index $i$ | Intermediate precoder matrix $W'$ |
|---|---|
| $0 - 3$ | $\dfrac{1}{\sqrt{2}}\begin{bmatrix}\overline{W}_{3,i}\\0_{4\times3}\end{bmatrix}$ |
| $4 - 7$ | $\dfrac{1}{\sqrt{2}}\begin{bmatrix}0_{4\times3}\\\widetilde{W}_{3,(i-4)}\end{bmatrix}$ |
| $8 - 135$ | $\dfrac{1}{\sqrt{2}}\begin{bmatrix}\widetilde{W}_{1,\lfloor(i-8)/8\rfloor} & 0_{4\times2}\\0_{4\times1} & \overline{W}_{2,(i\bmod 8)}\end{bmatrix}$ |
| $136 - 263$ | $\dfrac{1}{\sqrt{2}}\begin{bmatrix}\overline{W}_{2,\lfloor(i-136)/16\rfloor} & 0_{4\times1}\\0_{4\times2} & \overline{W}_{1,((i-136)\bmod 16)}\end{bmatrix}$ |

**(c) Intermediate precoding matrix for 3-Layer**

| TPMI index $i$ | Intermediate precoder matrix $W'$ |
|---|---|
| $0 - 1$ | $\dfrac{1}{\sqrt{2}}\begin{bmatrix}\overline{W}_{4,i}\\0_{4\times4}\end{bmatrix}$ |
| $2 - 3$ | $\dfrac{1}{\sqrt{2}}\begin{bmatrix}0_{4\times4}\\\overline{W}_{4,(i-2)}\end{bmatrix}$ |
| $4 - 67$ | $\dfrac{1}{\sqrt{2}}\begin{bmatrix}\overline{W}_{2,\lfloor(i-4)/8\rfloor} & 0_{4\times2}\\0_{4\times2} & \overline{W}_{2,((i-4)\bmod 8)}\end{bmatrix}$ |

**(d) Intermediate precoding matrix for 4-Layer**

EP 4 615 069 A1

# FIG. 11

| $i$ | $\overline{W}_{1,i}$(ordered from left to right in increasing order of $i$) | | | | | | | |
|---|---|---|---|---|---|---|---|---|
| $0-7$ | $\dfrac{1}{2}\begin{bmatrix}1\\1\\1\\1\end{bmatrix}$ | $\dfrac{1}{2}\begin{bmatrix}1\\1\\j\\j\end{bmatrix}$ | $\dfrac{1}{2}\begin{bmatrix}1\\1\\-1\\-1\end{bmatrix}$ | $\dfrac{1}{2}\begin{bmatrix}1\\1\\-j\\-j\end{bmatrix}$ | $\dfrac{1}{2}\begin{bmatrix}1\\j\\1\\j\end{bmatrix}$ | $\dfrac{1}{2}\begin{bmatrix}1\\j\\j\\-1\end{bmatrix}$ | $\dfrac{1}{2}\begin{bmatrix}1\\j\\-1\\-j\end{bmatrix}$ | $\dfrac{1}{2}\begin{bmatrix}1\\j\\-j\\1\end{bmatrix}$ |
| $8-15$ | $\dfrac{1}{2}\begin{bmatrix}1\\-1\\1\\-1\end{bmatrix}$ | $\dfrac{1}{2}\begin{bmatrix}1\\-1\\j\\-j\end{bmatrix}$ | $\dfrac{1}{2}\begin{bmatrix}1\\-1\\-1\\1\end{bmatrix}$ | $\dfrac{1}{2}\begin{bmatrix}1\\-1\\-j\\j\end{bmatrix}$ | $\dfrac{1}{2}\begin{bmatrix}1\\-j\\1\\-j\end{bmatrix}$ | $\dfrac{1}{2}\begin{bmatrix}1\\-j\\j\\1\end{bmatrix}$ | $\dfrac{1}{2}\begin{bmatrix}1\\-j\\-1\\j\end{bmatrix}$ | $\dfrac{1}{2}\begin{bmatrix}1\\-j\\-j\\-1\end{bmatrix}$ |

# FIG. 12

Transmit UE capability information — A05

Receive UL scheduling DCI — A10

Transmit UL signal — A15

# FIG. 13

Receive UE capability information — B05

↓

Transmit UL scheduling DCI — B10

↓

Receive UL signal — B15

# FIG. 14

1

# FIG. 15

108          208

100                                                    200

First Device                                      Second Device

102—  | Processor(s) |  | Transceiver(s) |          | Transceiver(s) |  | Processor(s) |  —202

| Memory(s) |                                          | Memory(s) |

104          106                                206          204

# FIG. 16

Device(100, 200)

Communication unit (110)
(e.g., 5G communication unit)

Control unit (120)
(e.g., processor(s))

Communication circuit (112)
(e.g., processor(s), memory(s))

Memory unit (130)
(e.g., RAM, storage)

Transceiver(s) (114)
(e.g., RF unit(s), antenna(s))

Additional components (140)
(e.g., power unit/battery, I/O unit,
driving unit, computing unit)

# FIG. 17

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

# FIG. 18

*UE shall monitor PDCCH*

*On Duration* *Opportunity for DRX*

*DRX Cycle*

## INTERNATIONAL SEARCH REPORT

| International application No. |
| --- |
| **PCT/KR2023/017199** |

| A. | CLASSIFICATION OF SUBJECT MATTER |
| --- | --- |

**H04W 52/14**(2009.01)i; **H04W 52/36**(2009.01)i; **H04W 8/24**(2009.01)i; **H04B 7/0426**(2017.01)i; **H04B 7/0456**(2017.01)i; **H04B 7/06**(2006.01)i; **H04W 72/12**(2009.01)i; **H04W 52/32**(2009.01)i; **H04W 52/42**(2009.01)i

According to International Patent Classification (IPC) or to both national classification and IPC

| B. | FIELDS SEARCHED |
| --- | --- |

Minimum documentation searched (classification system followed by classification symbols)

H04W 52/14(2009.01); H04W 8/22(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 최대 전력(full power), 8개 송신 안테나(8 transmission antenna), TPMI(transmission precoding matrix index), 스케일링(scaling), 능력(capability), 안테나 포트 그룹(antenna port group)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | ZTE. SRI/TPMI enhancement for enabling 8 TX UL transmission. R1-2203269, 3GPP TSG RAN WG1 Meeting #109-e, e-Meeting. 29 April 2022.<br>See section 2.3.4. | 1-2,5,7,10-15<br>3-4,6,8-9 |
| Y | WO 2021-229758 A1 (NTT DOCOMO, INC.) 18 November 2021 (2021-11-18)<br>See paragraphs [0015], [0024], [0048] and [0222]; and claim 1. | 1-2,5,7,10-15 |
| A | XIAOMI. Enhancements on 8Tx uplink transmission. R1-2203799, 3GPP TSG RAN WG1 #109-e, e-Meeting. 29 April 2022.<br>See sections 2-3. | 1-15 |
| A | INTERDIGITAL, INC. Enhanced SRI/TPMI for 8TX UE. R1-2208499, 3GPP TSG RAN WG1 #110bis-e, e-Meeting. 30 September 2022.<br>See sections 2-3. | 1-15 |

☑ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **22 February 2024** | **22 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/017199**

### C. DOCUMENTS CONSIDERED TO BE RELEVANT

| Category* | Citation of document, with indication, where appropriate, of the relevant passages | Relevant to claim No. |
|---|---|---|
| A | SAMSUNG. Views on TPMI/SRI enhancements for 8Tx UL transmission. R1-2209720, 3GPP TSG RAN WG1#110-bis-e, e-Meeting. 30 September 2022. See sections 2.1-2.2. | 1-15 |

Form PCT/ISA/210 (second sheet) (July 2022)

**INTERNATIONAL SEARCH REPORT**
Information on patent family members

International application No.

**PCT/KR2023/017199**

| Patent document cited in search report | | | Publication date (day/month/year) | Patent family member(s) | | | Publication date (day/month/year) |
|---|---|---|---|---|---|---|---|
| WO | 2021-229758 | A1 | 18 November 2021 | CN | 116114278 | A | 12 May 2023 |
| | | | | EP | 4152787 | A1 | 22 March 2023 |
| | | | | WO | 2021-229758 | A1 | 18 November 2021 |

Form PCT/ISA/210 (patent family annex) (July 2022)